# EUROPÄISCHE PATENTSCHRIFT

(11) **EP 3 585 670 B1**
(45) Veröffentlichungstag und Bekanntmachung des Hinweises auf die Patenterteilung: **12.07.2023**
(21) Anmeldenummer: 18705554.6
(22) Anmeldetag: 01.02.2018
(51) Int. Cl.: B62B 3/00, B62B 3/10, F24B 15/00

(54) **TRANSPORTABLES BRENNHOLZLAGER MIT BRENNHOLZAUFNAHME MIT TRANSPORTROLLEN**
TRANSPORTABLE FIREWOOD STORAGE WITH FIREWOOD HOLDER WITH TRANSPORT ROLLERS
STOCKAGE DE BOIS DE CHAUFFAGE TRANSPORTABLE AVEC PORTE-BOIS DE CHAUFFAGE AVEC ROULEAUX DE TRANSPORT

(30) Priorität: 22.02.2017 DE 102017103611
(43) Veröffentlichungstag der Anmeldung: 01.01.2020
(73) Patentinhaber: Landwehr, Arno, 82319 Starnberg (DE)
(72) Erfinder: Landwehr, Arno, 82319 Starnberg (DE)
(74) Vertreter: Söllner, Udo
(86) Internationale Anmeldenummer: PCT/EP2018/052483
(87) Internationale Veröffentlichungsnummer: WO 2018/153631

(56) Entgegenhaltungen:
- CH-A- 306 743
- DE-A1-102007 043 300
- DE-U1- 29 620 876
- DE-U1-202016 002 655
- GR-B- 1 007 227
- US-A- 3 999 775
- US-A1- 2013 087 982
- US-B1- 6 929 268

## Beschreibung

Die vorliegende Erfindung betrifft ein transportables Brennholzlager mit einer Brennholzaufnahme nach dem Oberbegriff des Anspruchs 1.

Eine Brennholzaufnahme in der Form einer Regalvorrichtung zur Aufnahme von Brennmaterial ist anhand der DE 20 2012 007 782 U1 bekannt geworden. Diese Brennholzaufnahme zeichnet sich durch die Ausbildung durch einzelne Streben aus, die zu einem Gestell verbunden sind, in das Scheitholz eingelagert werden kann, wobei dann das aus Metallstreben zusammengesetzte Gestell mit dem Scheitholz mit einer Sackkarre transportiert werden kann.

Anhand der US 3,021,011 B1 ist ein mit Rollen versehenes Gestell zur Aufnahme von Feuerholz bekannt geworden. Das Gestell weist dabei eine plattenförmige Auffangwanne auf, an deren Unterseite zwei U-förmige Bügel angeordnet sind, an deren jeweiligen Enden Transportrollen angeordnet sind. An der Oberseite der Auffangwanne sind ebenfalls zwei U-förmige Bügel vorgesehen, zwischen denen Scheitholz eingelegt werden kann, so das das Gestell zusammen mit dem Scheitholz verfahren werden kann.

Anhand der US 4,264,081, B1 ist eine Feuerholzaufnahme bekannt geworden, welche ebenfalls aus Metallrohren zu einem verfahrbaren Gestell zusammengesetzt ist, an dessen Unterseite ein Tragelement mit vier zu einem Rechteck zusammengesetzten Rohren angeordnet ist, an deren Eckbereichen jeweils eine Transportrolle vorgesehen ist. Von den Eckbereichen erstrecken sich Seitenelemente aus ebenfalls Metallrohren vom Tragelement weg und die Seitenelemente werden an der Oberseite mit U-förmigen Metallbügeln miteinander verbunden.

Diese bekannte Feuerholzaufnahme dient aufgrund ihres aus hohlen Metallrohren bestehenden leichtgewichtigen Aufbaus in erster Linie zum Transport einer geringen Menge von Scheitholz innerhalb des Hauses.

Die Druckschrift CH 306 743 A beschreibt einen Transportbehälter mit einem auf Rollen ruhenden Boden und vier Seitenteilen, von denen ein Seitenteil als bewegliches Verschlussteil ausgebildet ist.

Die Druckschrift GR 1 007 227 B zeigt eine Rollpalette zum Speichern und zum Transport von Feuerholz mit einem Rahmen, an dessen Unterseite vier Räder angebracht sind.

Die Druckschrift DE 10 2007 043 300 A1 beschreibt eine Holztransportbank, in die eine Achse mit zwei Rädern eingehängt werden kann.

Die genannten Feuerholzaufnahmen zeichnen sich aufgrund ihres leichtgewichtigen Aufbaus in erster Linie zum Transport und zur Aufbewahrung von Scheitholz innerhalb von Wohnräumen aus und zwar insbesondere auch deshalb, weil sie jeweils nur eine geringe Menge an Scheitholz aufnehmen können. Zum Transport von Scheitholz von außerhalb des Gebäudes nach innerhalb des Gebäudes sind die bekannten Feuerholzaufnahmen nicht geeignet, insbesondere auch deshalb nicht, da sie nicht dafür vorgesehen sind, bereits mit Scheitholz versehen außerhalb des Gebäudes gelagert zu werden und auf diese Weise als mobiles Brennholzlager zu dienen. Auch besitzen die bekannten Feuerholzaufnahmen keine hohe Festigkeit bzw. Stabilität und können daher keine größeren Mengen an Scheitholz aufnehmen.

Ausgehend hiervon liegt der vorliegenden Erfindung die Aufgabe zu Grunde, ein transportables Brennholzlager zu schaffen, welche einerseits zur Aufnahme und Speicherung einer größeren Menge von Scheitholz geeignet ist und außerhalb des Hauses, also im Freien gelagert werden kann und zum Transport des so gespeicherten Scheitholzvorrats zur Feuerstelle innerhalb des Hauses oder der Wohnung geeignet ist und darüber hinaus ein optisch ansprechendes Äußeres aufweist und dem Scheitholz bei der Lagerung im Freien Wetterschutz bietet und eine zur Aufnahme und Speicherung der größeren Menge von Scheitholz geeignete Steifigkeit aufweist.

Die Erfindung weist zur Lösung dieser Aufgabe die im Anspruch 1 genannten Merkmale auf, vorteilhafte Weiterbildungen der Erfindung sind in den weiteren Ansprüchen beschrieben.

Die Erfindung schafft eine Brennholzaufnahme mit einem mit Transportrollen versehenen Tragelement sowie mit an Querseiten des Tragelements angeordneten ersten und zweiten Seitenelementen und einem an Querseiten der Seitenelemente gegenüber dem Tragelement angeordneten Verbindungselement, wobei die Elemente eine rechteckförmige flächige Ausbildung mit Innenflächen aufweisen und zwischen den Innenflächen einen Innenraum ausbilden und wobei die Brennholzaufnahme mindestens zwei Versteifungselemente aufweist, welche mindestens zwei der Elemente miteinander verbinden, wobei die Versteifungselemente als Zugseile ausgebildet sind und die Versteifungselemente zwischen einander diametral gegenüberliegenden Eckbereichen des Innenraums verlaufen und dabei außerhalb des Innenraums angeordnet sind.

Über die rechteckförmige flächige Ausbildung des unteren Tragelements wird eine stabile Auflagefläche für Scheitholz oder ganz allgemein Brennholz geschaffen und aufgrund der Ausbildung des Tragelements als geschlossenes Flächenelement besteht auch nicht die Gefahr, dass am gespeicherten Holz vorhandene Verunreinigungen beispielsweise beim Transport der befüllten Brennholzaufnahme in den mit der Brennstelle versehenen Wohnraum auf den Fußboden des Wohnraums fallen. Die Ausbildung der Elemente vorzugsweise als geschlossene platten- oder brettförmige Elemente sorgt dafür, dass das gespeicherte Brennholz auch bei längerer Lagerung im Freien nicht von Regen oder Schnee durchnässt werden kann. Die rechteckförmige Ausbildung der Elemente umfasst dabei deren Ausbildung derart, dass das Element eine Breitenerstreckung aufweist, die größer ist als die Erstreckung in die zur Breitenrichtung senkrechte Richtung, also die Höhenrichtung oder Tiefenrichtung als auch eine quadratische Ausbildung der Elemente.

Die flächige Ausbildung der beiden Seitenelemente sorgt dafür, dass verglichen mit hohlwandigen dünnen Rohrelementen zur Bildung der Seitenelemente, wie dies bei den bekannten Brennholzaufnahmen der Fall ist, auch eine größere Menge von in der Brennholzaufnahme gespeichertem Scheitholz nicht zu einem seitlichen Ausbauchen der Seitenelemente führt. Schließlich führt die Ausbildung des an den Seitenelementen angeordneten flächigen Verbindungselements dafür, dass die erfindungsgemäße Brennholzaufnahme eine hohe strukturelle Festigkeit aufweist und auch dazu, dass die Brennholzaufnahme mit im Innenraum angeordneten Scheitholz auch im Freien gelagert werden kann und das Scheitholz gegen Regen oder Schnee von oben her geschützt ist.

Die Elemente bilden so eine von den Innenflächen begrenzte kastenförmige Einfassung, bei der sich je nach dem zur Bildung der Einfassung verwendeten Material in der Form eines Holzwerkstoffs ein unterschiedliches optisches Erscheinungsbild einstellt.

Wird für die flächigen Elemente oder Rahmenelemente beispielsweise ein Edelholz in der Form von Mahagoni oder Teakholz oder dergleichen verwendet, kann die erfindungsgemäße Brennholzaufnahme im Wohnraum auch als optischer Raumteiler eingesetzt werden, es wird also gleichsam ein multifunktionales Möbelstück geschaffen. Wird für die flächigen Elemente ein sehr dauerhaftes Holz verwendet, wie beispielsweise Bankirai, so kann dies sowohl als Holzlager für den dauerhaften Einsatz im Freien verwendet werden als auch als transportables Brennholzlager für den Transport von Brennholz vom Freien in den Wohnraum als auch als optisches Erscheinungselement für den Verbleib im Wohnraum. Wird für die Elemente ein kostengünstiges Holz, wie beispielsweise Kiefer verwendet, dann kann die Brennholzaufnahme nach deren zeitweiliger Verwendung auch als Brennstoff verwendet werden.

Es ist nach einer Weiterbildung der Erfindung auch vorgesehen, dass die Elemente lösbar miteinander verbunden sind, die Brennholzaufnahme bei längerem Nichtgebrauch also in Einzelteile zerlegt und gelagert werden kann. Hierzu ist es möglich, die Elemente mit steckbaren Verbindungselementen in der Form von beispielsweise Feder-Nut-Verbindungselementen zu versehen, so dass die Elemente einfach und lösbar miteinander verbunden werden können.

Nach einer Weiterbildung des erfindungsgemäßen Brennholzlagers ist es auch vorgesehen, dass zwischen den Elementen mindestens ein Unterteilungselement vorgesehen ist, welches den Innenraum mindestens zweiteilig ausbildet. Das Unterteilungselement kann also beispielsweise als rechteckförmiges flächiges horizontales Element zwischen den beiden Seitenelementen angeordnet werden und so dafür sorgen, dass der Innenraum der kastenförmigen Einfassung einen Bereich zur Aufnahme von Brennholz in der Form von Scheitholz oder dergleichen aufweist und einen Bereich zur Aufnahme von beispielsweise Zündhölzern, einem Kaminbesteck oder einem anderen Gegenstand zur Verwendung durch den Benutzer der erfindungsgemäßen Brennholzaufnahme.

Das Unterteilungselement kann auch zwischen dem bodenseitigen Tragelement und dem oberseitigen Verbindungselement angeordnet sein, sodass sich zwei in vertikaler Richtung des Innenraums betrachtet parallele Innenräume einstellen, welche beispielsweise zur Aufnahme von unterschiedlichen Brennhölzern verwendet werden können, wie beispielsweise einem kleinformatigen Anzündholz und einem großformatigen Scheitholz für den Dauerbrand.

Nach der Erfindung ist es vorgesehen, dass die Brennholzaufnahme mindestens zwei Versteifungselemente aufweist, welche mindestens zwei der Elemente miteinander verbinden, wobei es sich bei den Versteifungselementen um zwei Zugseile handelt, die zwischen einander diametral gegenüberliegenden Eckbereichen des Innenraums verlaufen und dabei außerhalb des Innenraums angeordnet sind.

So kann beispielsweise ein Zugseil zwischen einem unteren Eckbereich, der vom bodenseitigen Tragelement und einem Seitenelement gebildet wird, und einem oberen Eckbereich, der vom anderen Seitenelement und dem oberen Verbindungselement gebildet wird, gespannt sein. In ähnlicher Weise kann zwischen den beiden anderen Eckbereichen ebenfalls ein Zugseil gespannt werden, sodass die beiden Zugseile also kreuzförmig an der Rückseite der kastenförmig ausgebildeten Brennholzaufnahme verlaufen und die beiden Zugseile die Brennholzaufnahme insgesamt versteifen.

Die erfindungsgemäße Brennholzaufnahme zeichnet sich nach einer Weiterbildung auch dadurch aus, dass ein Seitenelement mit mindestens drei weiteren Transportrollen - also beispielsweise auch vier Transportrollen oder mehr - versehbar ist und eine so ausgebildete und um 90 Grad gedrehte Brennholzaufnahme auf den weiteren Transportrollen zur Auflage an einer Abstützfläche bringbar ist. Damit kann diese Brennholzaufnahme sowohl mittels der Transportrollen am Tragelement bewegt werden, also mit den Seitenelementen in Hochachsrichtung, als auch mit den Seitenelementen quer zur Hochachsrichtung, wenn die Brennholzaufnahme an den am Seitenelement angeordneten Transportrollen verlagert wird. Wenn die Seitenelemente länger ausgebildet sind als das Tragelement, ergibt sich bei der ersten Konfiguration eine Brennholzaufnahme ähnlich einem hochstehenden Regal, während sich bei der zweiten Konfiguration eine Brennholzaufnahme ergibt, welche ähnlich einer Kommode oder einem liegenden Regal ausgebildet ist und somit in Breitenrichtung eine größere Abmessung besitzt als in Höhenrichtung. Die Konfiguration mit mindestens drei weiteren Transportrollen an einem Seitenelement sorgt dafür, dass eine Brennholzaufnahme sowohl in Hochachsrichtung - es ergibt sich eine Konfiguration ähnlich einem stehenden Regal - als auch in Querachsrichtung - es ergibt sich eine Konfiguration ähnlich einem liegenden Regal - eingesetzt werden kann.

In vorteilhafter Weise sind hier zu an einem Seitenelement oder auch in beiden Seitenelementen Aufnahmen zur lösbaren Festlegung von Transportrollen vorgesehen, an denen also die Transportrollen dann angeordnet werden können, wenn die Brennholzaufnahme in Querachsrichtung eingesetzt werden soll. In ähnlicher Weise können bei einer so ausgebildeten Brennholzaufnahme an dem Tragelement ebenfalls Aufnahmen zur lösbaren Festlegung der Transportrollen vorgesehen sein, sodass die Transportrollen dann vom Tragelement abgenommen werden können, wenn die Brennholzaufnahme in Querachsrichtung verwendet wird, also aus der Hochachsrichtung ähnlich einem stehenden Regal um 90 Grad zur Seite gekippt wird, um eine Brennholzaufnahme bereitzustellen, die sowohl in Querachsrichtung als auch in Hochachsrichtung verwendet werden kann. Bei der Verwendung in Querachsrichtung besitzt die Brennholzaufnahme dann in Breitenrichtung eine Erstreckung, die größer ist als die Erstreckung in Hochachsrichtung.

Es ist nach einer Weiterbildung der Erfindung auch vorgesehen, dass das Tragelement an der der Innenfläche gegenüber liegenden Außenfläche mit mindestens einem Versteifungsbauteil versehen ist. Bei dem Versteifungsbauteil kann es sich beispielsweise um einen T-Träger handeln, der an der Unterseite des Tragelements kreuzweise vorgesehen ist, um die Tragfähigkeit und Stabilität der erfindungsgemäßen Brennholzaufnahme weiter zu erhöhen. Am Tragelement ist hierzu an der Unterseite vorzugsweise eine Aufnahmenut zur zumindest teilweise verdeckten Anordnung des Versteifungsbauteils vorgesehen. Das Versteifungsbauteil kann an der Unterseite des Tragelements auch kreuzweise verlaufend vorgesehen sein, also so, dass sich jeweils ein Versteifungsbauteil von einem Eckbereich des Tragelements zum diametral gegenüberliegenden Eckbereich des Tragelements erstreckt und sich so zwei Versteifungsbauteile an der Unterseite des Tragelements kreuzweise verlaufend angeordnet befinden. Diese können an der Unterseite des Tragelements so angeordnet sein, dass sie nicht sichtbar nach außen in Erscheinung treten.

Die Brennholzaufnahme kann nach einer Weiterbildung an mindestens einer Innenfläche eines Elements ein Lichtelement aufweisen, bei dem es sich beispielsweise um ein mit Leuchtdioden versehenes Leuchtband handeln kann, welches beispielsweise zur Beleuchtung des Innenraums dient, um beispielsweise eine optische Leuchtwirkung bei einer als Raumteiler eingesetzten Brennholzaufnahme zu erzielen.

Es ist nach einer Weiterbildung der Erfindung auch vorgesehen, dass die Brennholzaufnahme mindestens ein an einem Element angeordnetes und relativ dazu ausklappbares Stützelement aufweist, welches an einer die Brennholzaufnahme abstützenden Unterlage lösbar angeordnet sein kann. Damit ist es möglich, das Stützelement relativ zur Brennholzaufnahme auszuklappen und einzuklappen, wobei sich das Stützelement im ausgeklappten Zustand an einer Unterlage abstützt. Dies ist beispielsweise dann von Vorteil, wenn eine vollständig befüllte Brennholzaufnahme im Freien gelagert wird, und einem hohen Winddruck ausgesetzt ist.

Es ist nach einer Weiterbildung der Erfindung auch vorgesehen, dass an mindestens einem Seitenelement ein relativ zum Innenraum verlagerbares Türelement angeordnet ist und der Innenraum mittels des Türelements reversibel verschlossen werden kann. Bei dem Türelement kann es sich beispielsweise um eine Drehtüre oder Schwenktüre handeln, nach einer Variante hierzu ist es auch möglich, dass es sich bei dem Türelement um eine Schiebetür handelt, die relativ zum Innenraum verlagert werden kann, sodass in allen Fällen der Innenraum mittels des Türelements oder der Türelemente auch verschlossen werden kann, was beispielsweise dann von Vorteil ist, wenn eine so weiter gebildete Brennholzaufnahme im Innenraum als Raumteiler eingesetzt wird.

Die Brennholzaufnahme kann auch dadurch weitergebildet werden, dass mindestens eine relativ zum Verbindungselement verschwenkbare, flächig ausgebildete Klappe vorgesehen ist, die zum Öffnen und Schließen des Innenraums verschwenkbar ist und in der Öffnungsstellung mit einer Außenfläche des Verbindungselements eine weitgehend ebene Fläche ausbildet. Das Verbindungselement verbindet die beiden Seitenflächen an der Oberseite, sodass die relativ zum Verbindungselement verschwenkbare ausgebildete Klappe in ihrer Öffnungsstellung zusammen mit dem Verbindungselement eine flächige Ebene ausbildet, die beispielsweise als Tischfläche im Freien oder auch im Wohnraum genutzt werden kann.

Damit die erfindungsgemäße Brennholzaufnahme auch eine einfache Handhabung bietet, ist es nach einer Weiterbildung vorgesehen, dass die Brennholzaufnahme mindestens ein Griffelement aufweist, welches vorzugsweise klappbar oder verschwenkbar ausgebildet ist. Der Benutzer der Brennholzaufnahme kann das beispielsweise in einem Seitenelement vorgesehene Griffelement herausklappen und dann die Brennholzaufnahme mittels der Transportrollen einfach bewegen, also von einem Ort zu einem anderen Ort verfahren und dann das Griffelement wieder einklappen.

Auch ist es nach einer Weiterbildung der Erfindung vorgesehen, dass die Brennholzaufnahme mindestens ein Koppelelement sowie mindestens eine Koppelelementaufnahme aufweist, die vorzugsweise an der Außenfläche des Verbindungselements oder einer Rückseite der Brennholzaufnahme angeordnet sind.

Über das Koppelelement kann eine erste Brennholzaufnahme mit einer Koppelelementaufnahme einer zweiten Brennholzaufnahme lösbar verbunden werden und die beiden Brennholzaufnahmen so aneinander festgelegt werden, dass diese eine Brennholzaufnahmeanordnung ausbilden, die optisch und strukturell einer aus Brennholzaufnahmen gebildeten Wand gleicht, die beispielsweise als Raumteiler oder auch im Freien als Sichtschutz oder Windschutz verwendet werden kann und dabei gleichzeitig der Aufnahme und Lagerung von Brennholz dient.

Bei einer mit Brennholz zumindest teilweise befüllten Brennholzwand kann zwischen den Holzstücken ein kastenförmiger Innenkasten angebracht werden, der einen Innenraum aufweist, der beispielsweise zur Aufnahme eines Kaminbestecks oder von Büchern oder ganz allgemein Gebrauchs- oder Dekorationsgegenständen oder dergleichen ausgebildet ist.

Die Erfindung wird im folgenden anhand der Zeichnungen näher erläutert. Diese zeigen in:
Fig. 1 eine schematische Darstellung eines transportablen Brennholzlagers mit einer Brennholzaufnahme nach einer Ausführungsform gemäß der vorliegenden Erfindung;
Fig. 2 eine schematische Darstellung einer Brennholzaufnahme nach einer weiteren Ausführungsform;
Fig. 3 eine schematische Darstellung einer Brennholzaufnahme nach einer weiteren Ausführungsform;
Fig. 4 eine schematische Darstellung einer Brennholzaufnahme nach einer weiteren Ausführungsform;
Fig. 5 eine schematische Darstellung einer Brennholzaufnahme mit Scheitholz im Innenraum sowie einem im Innenraum angeordneten Innenkasten;
Fig. 6 eine Darstellung ähnlich derjenigen nach Fig. 5 mit einer Brennholzaufnahme mit einer Breitenerstreckung die größer ist als die Höhenerstreckung;
Fig. 7 eine schematische Darstellung einer Brennholzaufnahme mit der Zusatzfunktionalität eines Sitzmöbels;
Fig. 8 eine schematische Darstellung einer Brennholzaufnahme mit zwei Klappdeckeln zur Realisierung der Zusatzfunktionalität eines Klapptisches;
Fig. 8A eine schematische und perspektivische Darstellung der Brennholzaufnahme nach Fig. 8 im ausgeklappten Zustand der Klappdeckel;
Fig. 8B eine schematische und perspektivische Darstellung der Brennholzaufnahme nach Fig. 8 im eingeklappten Zustand der Klappdeckel;
Fig. 9 eine schematische perspektivische Darstellung einer Brennholzaufnahme mit integriertem Lichtelement;
Fig. 10 eine schematische Darstellung einer Brennholzaufnahme mit zwei daran angeordneten Stützelementen;
Fig. 11 eine schematische Darstellung einer Brennholzaufnahme mit daran angeordneter Abdeckung für die Verwendung der Brennholzaufnahme im Freien; und
Fig. 12 eine schematische Darstellung einer Brennholzaufnahmeanordnung.

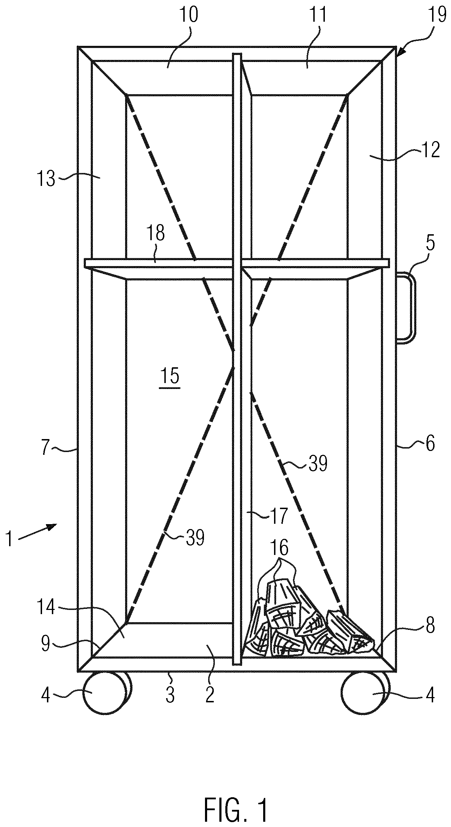

Fig. 1 die Zeichnung zeigt ein transportables Brennholzlager mit einer Brennholzaufnahme 1 mit einem Tragelement 2, an dem an der Unterseite 3 vier Transportrollen 4 angeordnet sind, von denen in der Zeichnung nur zwei ersichtlich sind. Die nicht dargestellten weiteren zwei Transportrollen 4 liegen im Bereich des in der Zeichnungsebene hinteren oder rückseitigen Endbereichs des Tragelements 2.

Mittels der Transportrollen 4 kann die Brennholzaufnahme 1 auf einer nicht näher dargestellten Unterlage, bei der es sich um einen Boden im Freien und auch einen Fußboden in einen Gebäude handeln kann, frei verfahren werden.

Zu diesem Zweck ist ein in Fig. 1 der Zeichnung schematisch dargestelltes Griffelement 5 vorgesehen, welches an dem ersten Seitenelement 6 angeordnet ist, wobei auch an dem, dem ersten Seitenelement 6 gegenüberliegenden zweiten Seitenelement 7 ein Griffelement 5 angeordnet sein kann, welches aufgrund der gewählten Perspektive in der Zeichnung in Fig. 1 nicht ersichtlich ist, da sich das an dem zweiten Seitenelement 7 angeordnete Griffelement 5 in einer nicht näher dargestellten Griffmulde im eingeklappten Zustand befindet.

Wie es ohne weiteres anhand von Fig. 1 der Zeichnung ersichtlich ist, sind die beiden Seitenelemente 6, 7 an einer ersten Querseite 8 und einer zweiten Querseite 9 des Tragelements 2 angeordnet, wobei die beiden Seitenelemente an dem Tragelement nicht lösbar oder auch lösbar festgelegt sein können. Die lösbare Anordnung der beiden Seitenelemente 6, 7 am Tragelement 2 weist den Vorteil auf, dass die Brennholzaufnahme 1 bei Nichtgebrauch zerlegt und verstaut werden kann. In diesem Fall ist dann auch das an den Seitenelementen 6, 7 angeordnete Verbindungselement 10 an den Seitenelementen 6, 7 lösbar festgelegt, wobei sich das Verbindungselement 10 dem Tragelement 2 gegenüberliegend angeordnet befindet.

Wie es ohne weiteres anhand der Zeichnung ersichtlich ist, besitzen alle Elemente, nämlich das Verbindungselement 10, die beiden Seitenelemente 6 und 7 und das Tragelement 2 eine rechteckförmige flächige und geschlossene Ausbildung auf und weisen Innenflächen 11, 12, 13, 14 auf, welche zwischen sich einen Innenraum 15 ausbilden, welcher zur Aufnahme einer in Fig. 1 der Zeichnung nur schematisch und auszugsweise dargestellten Menge an Brennholz in der Form von beispielsweise Scheitholz 16 vorgesehen ist.

Fig. 1 der Zeichnung zeigt darüber hinaus, dass im Innenraum 15 zwei Unterteilungselemente 17, 18 vorgesehen sind, wobei sich ein erstes Unterteilungselement 17 in der Form einer rechteckförmigen Platte zwischen der Innenfläche 14 des Tragelements 2 und der Innenfläche 11 des Verbindungselements 10 erstreckt und sich das zweite Unterteilungselement 18 in der Form einer rechteckförmigen Platte zwischen der Innenfläche 12 des Seitenelements 6 und der Innenfläche 13 des Seitenelements 7 erstreckt. Obwohl in Fig. 1 eine Ausführungsform mit Unterteilungselementen dargestellt ist, umfasst die Erfindung auch eine Ausführungsform ohne Unterteilungselement beziehungsweise ohne Unterteilungselemente.

Über die beiden Unterteilungselemente 17, 18 kann ein die Steifigkeit und Festigkeit der Brennholzaufnahme 1 verbessernder Aufbau erzielt werden, sodass die von den Innenflächen 11, 12, 13, 14 begrenzte kastenförmige Einfassung 19 insgesamt steifer ist als eine Einfassung ohne Unterteilungselemente. Die Einfassung entspricht einem den Innenraum 15 einschließenden Rahmen.

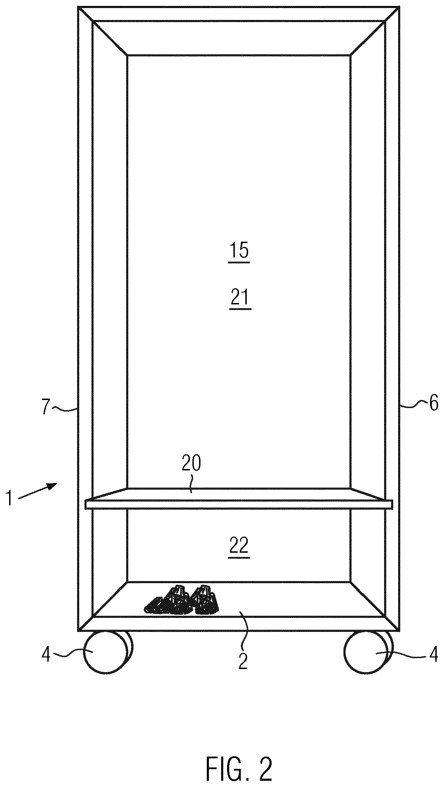

Fig. 2 der Zeichnung zeigt eine modifizierte Ausführungsform einer Brennholzaufnahme 1, bei der ein horizontal verlaufendes Unterteilungselement 20 im unteren Bereich der Seitenelemente 6, 7 oberhalb des Tragelements 2 angeordnet ist. Bei dieser Konfiguration kann beispielsweise im ersten Innenraumbereich nicht näher dargestelltes Scheitholz angeordnet werden, während im zweiten Innenraumbereich 22 beispielsweise kleinformatiges Anzündholz aufbewahrt werden kann.

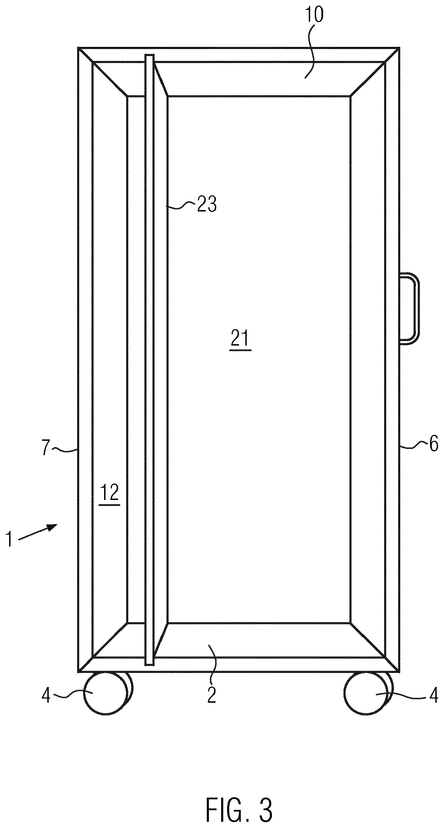

Fig. 3 der Zeichnung zeigt wiederum eine modifizierte Ausführungsform der Brennholzaufnahme 1, bei der ein vertikal verlaufendes Unterteilungselement 23 zwischen dem Tragelement 2 und dem Verbindungselement 10 angeordnet ist, sodass sich wieder eine Konfiguration mit zwei Innenräumen 21, 22 ergibt, die beispielsweise wieder für den vorstehend genannten Zweck verwendet werden können.

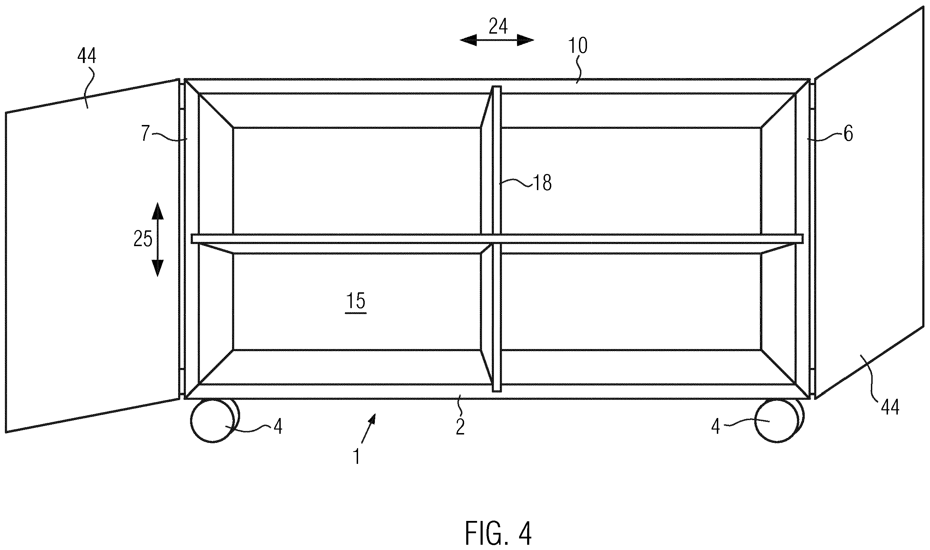

Fig. 4 der Zeichnung zeigt eine weitere modifizierte Ausführungsform der Brennholzaufnahme 1, die sich von der Brennholzaufnahme nach Fig. 1 dadurch unterscheidet, dass die in Fig. 4 gezeigte Brennholzaufnahme eine Breitenerstreckung in Richtung des Doppelpfeils 24 aufweist, die größer ist als die Höhenerstreckung in Richtung des Doppelpfeils 25. Darüber hinaus zeigt Fig. 4 auch ein am Seitenelement 6 angelenktes Türelement 44, mit dem der Innenraum 15 reversibel verschlossen werden kann. Auch am anderen Seitenelement 7 kann ein Türelement 44 angelenkt sein.

Auch die in Fig. 4 gezeigte Brennholzaufnahme 1 weist wiederum zwei Unterteilungselemente 17, 18 auf, sodass der Innenraum 15 bei dieser Ausführungsform ähnlich der in Fig. 1 gezeigten Ausführungsform in vier Segmente unterteilt ist. Die Segmente können zur Aufnahme von Scheitholz und/oder Anzündholz und/oder einem Kaminbesteck oder dergleichen verwendet werden.

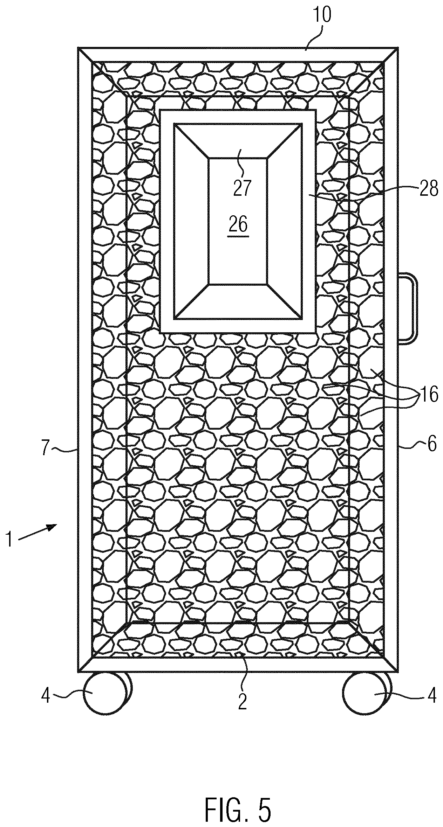

Fig. 5 der Zeichnung zeigt eine Ausführungsform der Brennholzaufnahme 1 ähnlich derjenigen nach Fig. 1, bei der der Innenraum 15 vollständig mit Scheitholz 16 ausgefüllt ist mit der Ausnahme eines Bereichs 26, der sich innerhalb eines kastenförmigen Innenkastens 27 ergibt. Bei dieser Ausführungsform kann Scheitholz 16 im Innenraum 15 bis zu einer ausgewählten Höhe aufgeschichtet werden und dann wird der Innenkasten 27 auf das bereits aufgeschichtete Scheitholz aufgesetzt und um den Außenumfang 28 des Innenkastens 27 herum weiteres Scheitholz 16 aufgeschichtet, bis sich die in Fig. 5 gezeigte Konfiguration ergibt.

Diese Konfiguration erzeugt ein optisches Gesamtbild, welches beispielsweise bei der Verwendung der Brennholzaufnahme 1 im Innenraum als Holzlager und gleichzeitig als Raumteiler zum Einsatz kommen kann. Selbstverständlich kann aber auch eine mit einem Innenkasten 27 versehene Brennholzaufnahme 1 mit Scheitholz versehen weiterhin im Freien als mobiles Brennholzlager verwendet werden, welches bei Bedarf über die Transportrollen 4 in einen mit der Brennstelle versehenen Innenraum eines Gebäudes transportiert werden kann, wodurch der wesentliche Vorteil der Mobilität der erfindungsgemäßen Brennholzaufnahme wieder zum Ausdruck kommt.

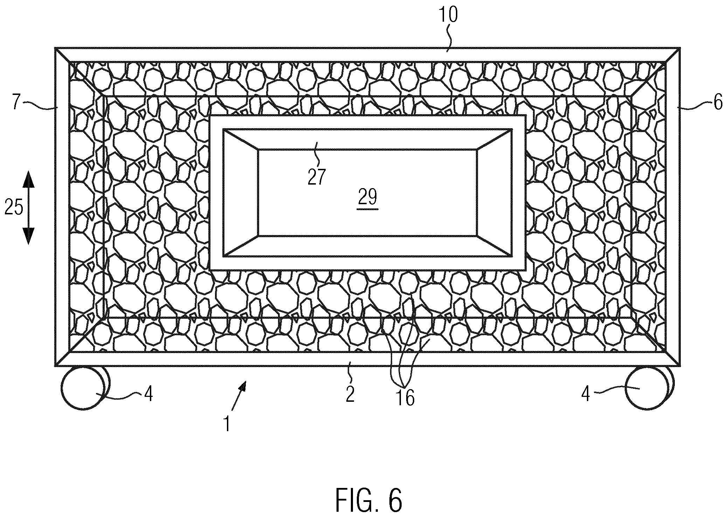

Fig. 6 der Zeichnung zeigt eine Ausführungsform der Brennholzaufnahme 1 mit einer Breitenerstreckung, die größer ist als die Höhenerstreckung der Brennholzaufnahme 1. Diese Brennholzaufnahme weist wiederum einen Innenkasten 27 auf, der von Scheitholz 16 eingeschlossen ist und einen Innenraum 29 ausbildet, der beispielsweise zur Aufnahme eines Kaminbestecks, Zündhölzern oder eines Buches oder von Gebrauchs- oder Dekorationsgegenständen geeignet ist, und somit neben der Funktionalität als Brennholzlager gleichzeitig als Designelement im Wohnraum dient. Die Funktion des Designelements kommt insbesondere dann zum Tragen, wenn die Elemente 2, 6, 7, 10 aus einem Edelholz gefertigt werden oder außen jeweils ein Furnier aus einem Edelholz tragen.

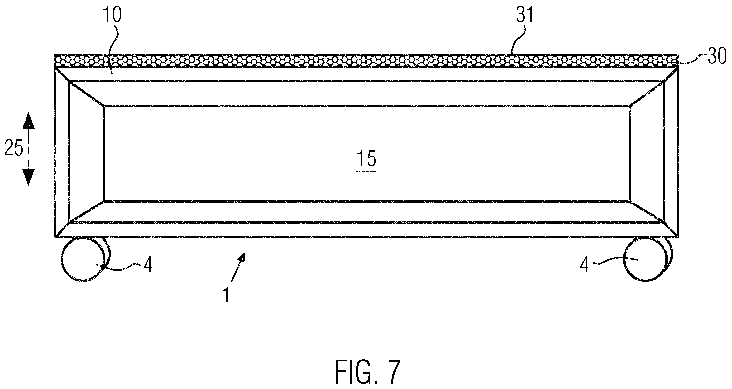

Fig. 7 zeigt eine weitere Ausführungsform der Brennholzaufnahme 1. Diese Ausführungsform besitzt wiederum eine Breitenerstreckung, die größer ist als die Höhenerstreckung, wobei die Höhenerstreckung dieser Ausführungsform in Richtung des Doppelpfeils 25 noch geringer ist als die Höhenerstreckung in Richtung des Doppelpfeils 25 der Ausführungsform nach Fig. 6. Auch die in Fig. 7 gezeigte Brennholzaufnahme zeigt einen Innenraum 15, der zur Aufnahme von Scheitholz vorgesehen ist und trägt an der Oberseite 30 des oberen Verbindungselements 10 eine Sitzfläche 31, sodass diese Brennholzaufnahme 1 gleichzeitig die Funktion einer Sitzbank oder einer Sitzfläche für den Benutzer erfüllt.

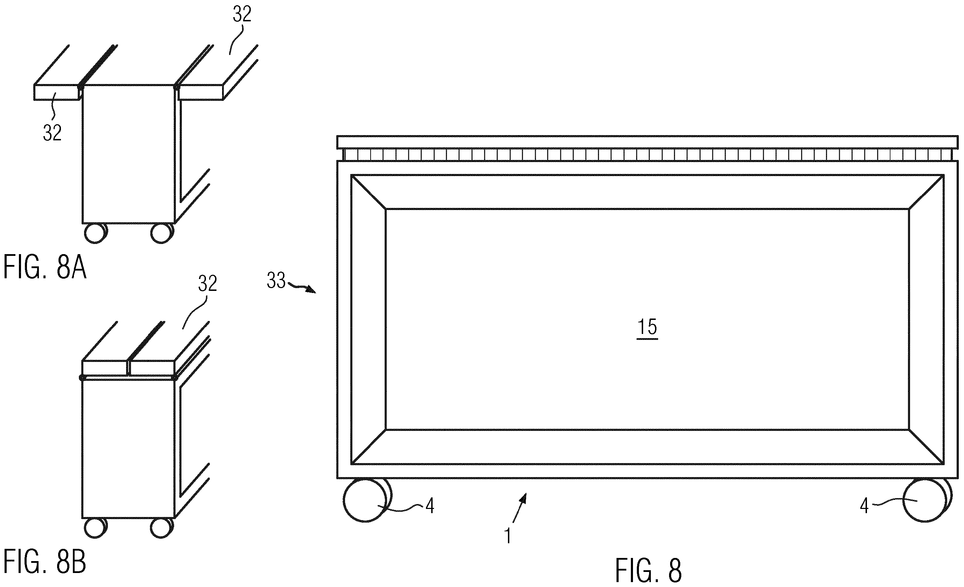

Fig. 8 der Zeichnung zeigt eine weitere modifizierte Ausführungsform einer Brennholzaufnahme 1.

Die wieder einen Innenraum 15 zur Aufnahme von Scheitholz aufweisende Brennholzaufnahme 1 weist an der Oberseite zwei Klappdeckel 32 auf, die relativ zum durch die Einfassung 19 gebildeten Körper 33 der Brennholzaufnahme 1 in eine in Fig. 8A gezeigte ausgeklappte Stellung und in eine in Fig. 8B gezeigte eingeklappte Stellung verschwenkt werden können.

Fig. 8A zeigt, dass die Brennholzaufnahme 1 in der aufgeklappten Stellung der beiden Klappdeckel 32 eine ebene Oberseite ausbildet, die einer Tischfläche gleicht, sodass die Brennholzaufnahme 1 bei dieser Ausführungsform gleichzeitig als multifunktionales Möbel zur Ausbildung eines Tisches dient.

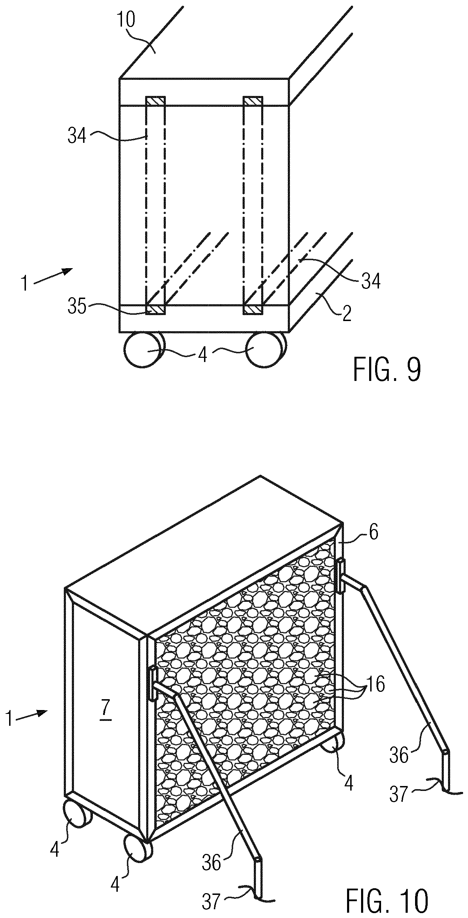

Fig. 9 zeigt eine schematische, perspektivische Teilansicht einer Brennholzaufnahme 1 zur Erläuterung einer weiteren Funktionalität der Brennholzaufnahme.

Mit den Bezugszeichen 34 sind zwei Lichtelemente gekennzeichnet, die als im Innenraum 15 umlaufende Leuchtbänder ausgestaltet sind, welche in umlaufenden Nuten 35 der Innenflächen 11, 12, 13, 14 angeordnet sind, sodass der Innenraum 15 der Ausführungsform der Brennholzaufnahme nach Fig. 9 mittels der beiden Leuchtbänder 34 als leuchtendes Designelement beleuchtet werden kann, während er trotzdem mit Scheitholz befüllt werden kann, da die Leuchtbänder 34 in den Nuten 35 zurückversetzt angeordnet sind und somit eine Beschädigung der Leuchtmittel der Leuchtbänder 34 in der Form von beispielsweise Leuchtdioden ausgeschlossen werden kann.

Fig. 10 der Zeichnung zeigt eine schematische perspektivische Darstellung einer Brennholzaufnahme 1 mit im Innenraum angeordnetem Scheitholz 16. Wie es ohne weiteres ersichtlich ist, sind bei dieser Ausführungsform der Brennholzaufnahme 1 zwei Stützelemente 36 vorgesehen, die an den Seitenelementen 6, 7 befestigt sind und mit der schematisch dargestellten Unterlage 37, bei der es sich beispielsweise um einen im Freien befindlichen Boden handeln kann, lösbar in Eingriff gebracht werden kann. Zu diesem Zweck können die Stützelemente 36, bei denen es sich beispielsweise um teleskopierbare Stangen handeln kann, relativ zu den Seitenelementen 6, 7 verschwenkt werden und dann an der Unterlage 37 zur Auflage gebracht werden, also beispielsweise mit einem jeweiligen im Boden befestigten Bodenanker, was dazu führt, dass auch ein erheblicher, auf die Brennholzaufnahme wirkender Winddruck bei der Verwendung der Brennholzaufnahme im Freien als Brennholzlager nicht dazu führt, dass diese umgeworfen wird.

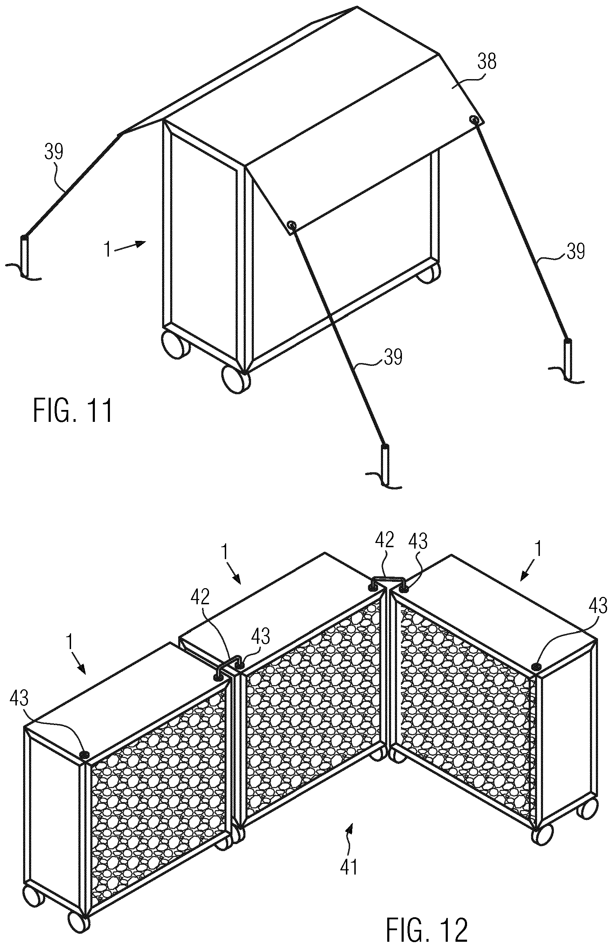

Fig. 11 der Zeichnung zeigt, dass die Brennholzaufnahme 1 bei der Verwendung im Freien auch mit einer Abdeckung 38 geschützt werden kann, die über Spannseile 39 abgespannt wird, die mit schematisch dargestellten Bodenankern am Untergrund befestigt werden. Die Abdeckung 38 kann dabei über nicht näher dargestellte, an der Einfassung 19 der Brennholzaufnahme 1 vorgesehene Befestigungsmittel in der Form von Ösen oder Druckknöpfen fixiert werden. Als Variante zu der in Fig. 11 dargestellten Abdeckung 38 ist es auch möglich, an der oder den Stirnseiten der Brennholzaufnahme 1, die durch eine Abdeckung gegen Umwelteinflüsse geschützt werden soll, eine umlaufende Nut vorzusehen, in die eine mit einer umlaufenden Abdichteinrichtung versehene Abdeckung eingefügt, beispielsweise eingeclipst werden kann, so dass der Innenraum mit Brennholz geschützt ist.

Die Brennholzaufnahme 1 weist ganz allgemein einen Innenraum 15 auf, der zur Aufnahme von Scheitholz oder anderem Feuerholz ausgebildet ist. Zu diesem Zweck ist die Brennholzaufnahme an der Vorderseite oder an der Rückseite offen ausgebildet, sie kann an einer dieser Seiten auch geschlossen ausgebildet werden, und beispielsweise eine nicht näher dargestellte Rückwand aufweisen.

Fig. 1 der Zeichnung zeigt in einer gestrichelten Darstellung zwei Versteifungselemente an der Rückseite der Brennholzaufnahme 1 also außerhalb des Innenraums 15 angeordnet und zwar in der Form von zwei kreuzweise verlaufenden Zugseilen 40, welche zwischen den beiden einander diametral gegenüberliegenden Eckbereichen der Rückseite der Einfassung 19 der Brennholzaufnahme 1 verlaufen und der Erhöhung der Steifigkeit der Brennholzaufnahme 1 dienen.

Fig. 12 der Zeichnung zeigt eine schematische und teilweise perspektivische Darstellung einer Brennholzaufnahmeanordnung 41 mit drei Brennholzaufnahmen 1.

Die Brennholzaufnahmen 1 sind jeweils mit einem Koppelelement in der Form beispielsweise einer Koppelstange 42 versehen, welche mit einer an jeder Brennholzaufnahme 1 vorgesehenen Koppelelementaufnahme 43 lösbar verbunden werden kann. Auf diese Weise können zwei oder mehrere Brennholzaufnahmen 1 lösbar miteinander verbunden werden, um beispielsweise eine Sichtschutzeinrichtung im Freien auszubilden. Auf diese Weise stellt die Brennholzaufnahme nicht nur ein mobiles Brennholzlager dar, sondern auch einen Sichtschutz und kann sogar als verfahrbares Zaunelement dienen.

Hinsichtlich vorstehend im einzelnen nicht näher erläuterter Merkmale wird in übrigen ausdrücklich auf die Ansprüche und die Zeichnungen verwiesen.

### Bezugszeichenliste

- 1.: Brennholzaufnahme
- 2.: Tragelement
- 3.: Unterseite
- 4.: Transportrolle
- 5.: Griffelement
- 6.: erstes Seitenelement
- 7.: zweites Seitenelement
- 8.: Querseite des Tragelements
- 9.: Querseite des Tragelements
- 10.: Verbindungselement
- 11.: Innenfläche
- 12.: Innenfläche
- 13.: Innenfläche
- 14.: Innenfläche
- 15.: Innenraum
- 16.: Scheitholz
- 17.: erstes Unterteilungselement
- 18.: zweites Unterteilungselement
- 19.: Einfassung
- 20.: Unterteilungselement
- 21.: Erster Innenraumbereich
- 22.: Zweiter Innenraumbereich
- 23.: Unterteilungselement
- 24.: Doppelpfeil
- 25.: Doppelpfeil
- 26.: Bereich
- 27.: Innenkasten
- 28.: Außenumfang
- 29.: Innenraum
- 30.: Oberseite
- 31.: Sitzfläche
- 32.: Klappdeckel
- 33.: Körper
- 34.: Lichtelement
- 35.: Nuten
- 36.: Stützelement
- 37.: Unterlage
- 38.: Abdeckung
- 39.: Versteifungselement
- 40.: Zugseil
- 41.: Brennholzaufnahmeanordnung
- 42.: Koppelstange
- 43.: Koppelelementaufnahme
- 44.: Türelement

## Patentansprüche

1. Transportables Brennholzlager, mit einer Brennholzaufnahme (1) mit einem mit Transportrollen (4) versehenen Tragelement (2) sowie mit an Querseiten (8, 9) des Tragelements (2) angeordneten ersten (6) und zweiten (7) Seitenelementen und einem an Querseiten der Seitenelemente (6, 7) gegenüber dem Tragelement (2) angeordneten Verbindungselement (10), wobei die Elemente (2, 6, 7, 10) eine rechteckförmige flächige Ausbildung mit Innenflächen (11, 12, 13, 14) aufweisen und zwischen den Innenflächen (11, 12, 13, 14) einen Innenraum (21) ausbilden, **gekennzeichnet durch** zwei Versteifungselemente (39), welche mindestens zwei Elemente (2, 6, 7, 10) miteinander verbinden, wobei die Versteifungselemente als Zugseile (40) ausgebildet sind und die Versteifungselemente (39) zwischen einander diametral gegenüberliegenden Eckbereichen des Innenraums (15) verlaufen und außerhalb des Innenraums (15) angeordnet sind.

2. Transportables Brennholzlager (1) nach Anspruch 1, **dadurch gekennzeichnet, dass** der Innenraum (1) von einer von den Innenflächen (11, 12, 13, 14) begrenzten kastenförmigen Einfassung (19) umschlossen ist.

3. Transportables Brennholzlager (1) nach Anspruch 1 oder 2, **dadurch gekennzeichnet, dass** die Elemente (2, 6, 7, 10) lösbar miteinander verbunden sind.

4. Transportables Brennholzlager (1) nach einem der vorstehenden Ansprüche, **dadurch gekennzeichnet, dass** zwischen den Elementen (2, 6, 7, 10) mindestens ein Unterteilungselement (17, 18) angeordnet ist derart, dass der Innenraum (15) mindestens zweigeteilt ausgebildet ist.

5. Transportables Brennholzlager (1) nach einem der vorstehenden Ansprüche, **dadurch gekennzeichnet, dass** ein Seitenelement (6, 7) mit mindestens drei weiteren Transportrollen (4) versehbar ist und eine so ausgebildete und um 90 Grad gedrehte Brennholzaufnahme (1) auf den weiteren Transportrollen (4) zur Auflage an einer Abstützfläche bringbar ist.

6. Transportables Brennholzlager (1) nach einem der vorstehenden Ansprüche, **dadurch gekennzeichnet, dass** das Tragelement (2) an der der Innenfläche gegenüber liegenden Außenfläche mit mindestens einem Versteifungsbauteil versehen ist.

7. Transportables Brennholzlager (1) nach Anspruch 6, **dadurch gekennzeichnet, dass** sich das Versteifungsbauteil zwischen diametral gegenüberliegenden Eckbereichen der Außenfläche erstreckt.

8. Transportables Brennholzlager (1) nach einem der vorstehenden Ansprüche, **dadurch gekennzeichnet, dass** an mindestens einer Innenfläche (11, 12, 13, 14) eines Elements (2, 6, 7, 10) mindestens ein Lichtelement (34), insbesondere ein mit Leuchtdioden versehenes Leuchtband, vorgesehen ist.

9. Transportables Brennholzlager (1) nach einem der vorstehenden Ansprüche, **gekennzeichnet durch** mindestens ein an einem Element (2, 6, 7, 10) angeordnetes und relativ dazu ausklappbares Stützelement (36), welches an einer die Brennholzaufnahme abstützenden Unterlage lösbar anordenbar ist.

10. Transportables Brennholzlager (1) nach einem der vorstehenden Ansprüche, **dadurch gekennzeichnet, dass** an mindestens einem Seitenelement (6, 7) ein relativ zum Innenraum (15) verlagerbares Türelement angeordnet ist und der Innenraum (15) mittels des Türelements (44) reversibel verschließbar ist.

11. Transportables Brennholzlager (1) nach einem der vorstehenden Ansprüche, **dadurch gekennzeichnet, dass** die Brennholzaufnahme mindestens ein Griffelement (5) aufweist, welches vorzugsweise klappbar oder verschwenkbar ausgebildet ist.

12. Transportables Brennholzlager (1) nach einem der vorstehenden Ansprüche, **gekennzeichnet durch** mindestens ein Koppelelement (42) sowie mindestens eine Koppelelementaufnahme (43), welche vorzugsweise an der Außenfläche des Verbindungselements (10) oder einer Rückseite der Brennholzaufnahme (1) angeordnet ist.

13. Transportables Brennholzlager (1) nach einem der vorstehenden Ansprüche, **dadurch gekennzeichnet, dass** die Elemente (2, 6, 7, 10) aus einem Holzwerkstoff ausgebildet sind.

14. Transportables Brennholzlager (1) nach einem der vorstehenden Ansprüche mit im Innenraum (15) angeordneten Holzstücken und einem zwischen den Holzstücken angeordneten kastenförmigen Innenkasten (27).

15. Brennholzaufnahmeanordnung (41) mit mindestens zwei transportablen Brennholzlagern (1) nach einem der Ansprüche 12 bis 14, **dadurch gekennzeichnet, dass** die Brennholzaufnahmen (1) mittels einem mit einer Koppelelementaufnahme (43) der einen Brennholzaufnahme (1) in Eingriff angeordnetem Koppelelement (42) der anderen Brennholzaufnahme (1) angeordnet sind.

## Claims

1. Transportable firewood storage facility, having a firewood receptacle (1) having a carrier element (2) provided with transport rollers and with first (6) and second (7) side elements arranged on transverse sides (8, 9) of the carrier element (2) and a connecting element (10) arranged on transverse sides of the side elements (6, 7) opposite the carrier element (2), wherein the elements (2, 6, 7, 10) have a flat rectangular construction having inner surfaces (11, 12, 13, 14) and form an interior (21) between the inner surfaces (11, 12, 13, 14), **characterised by** two stiffening elements (39) that connect at least two elements (2, 6, 7, 10) to each other, wherein the stiffening elements are designed as traction ropes (40) and the stiffening elements (39) run between corner regions of the interior (15) located diametrically opposite one another and are arranged outside the interior (15).

2. Transportable firewood storage facility (1) according to claim 1, **characterised in that** the interior (1) is surrounded by a box-shaped enclosure (19) delimited by the inner surfaces (11, 12, 13, 14).

3. Transportable firewood storage facility (1) according to claim 1 or 2, **characterised in that** the elements (2, 6, 7, 10) are releasably connected to one another.

4. Transportable firewood storage facility (1) according to one of the preceding claims, **characterised in that** at least one divider element (17, 18) is arranged between the elements (2, 6, 7, 10) such that the interior (15) is formed in at least two parts.

5. Transportable firewood storage facility (1) according to one of the preceding claims, **characterised in that** one side element (6, 7) can be provided with at least three further transport rollers (4), and a firewood receptacle (1) that is formed in this way and rotated by 90 degrees can be brought to rest on a support surface on the further transport rollers (4).

6. Transportable firewood storage facility (1) according to one of the preceding claims, **characterised in that** the carrier element (2) is provided with at least one stiffening component on the outer surface located opposite the inner surface.

7. Transportable firewood storage facility (1) according to claim 6, **characterised in that** the stiffening component extends between corner regions of the outer surface located diametrically opposite each other.

8. Transportable firewood storage facility (1) according to one of the preceding claims, **characterised in that** at least one light element (34), in particular a light band provided with light diodes, is provided on at least one inner surface (11, 12, 13, 14) of an element (2, 6, 7, 10).

9. Transportable firewood storage facility (1) according to one of the preceding claims, **characterised by** at least one support element (36) arranged on an element (2, 6, 7, 10) and able to be unfolded relative to the latter, which can be releasably arranged on a base supporting the firewood receptacle.

10. Transportable firewood storage facility (1) according to one of the preceding claims, **characterised in that** a door element (15) that can be displaced relative to the interior (15) is arranged on at least one side element (6, 7) and the interior (15) can be reversibly closed by means of the door element (44).

11. Transportable firewood storage facility (1) according to one of the preceding claims, **characterised in that** the firewood receptacle has at least one grip element (5) that is preferably designed so that it can be folded or pivoted.

12. Transportable firewood storage facility (1) according to one of the preceding claims, **characterised by** at least one coupling element (42) and at least one coupling element receptacle (43), which is preferably arranged on the outer surface of the connecting element (10) or a rear side of the firewood receptacle (1).

13. Transportable firewood storage facility (1) according to one of the preceding claims, **characterised in that** the elements (2, 6, 7, 10) are formed of a wooden material.

14. Transportable firewood storage facility (1) according to one of the preceding claims, having pieces of wood arranged in the interior (15) and a box-shaped inner box (27) arranged between the pieces of wood.

15. Firewood receptacle arrangement (41) having at least two transportable firewood storage facilities (1) according to one of claims 12 to 14, **characterised in that** the firewood receptacles (1) are arranged by means of a coupling element (42) of the other firewood receptacle (1) being arranged so that it engages with a coupling element receptacle (43) of the one firewood receptacle (1).

## Revendications

1. Rangement transportable pour bois de chauffage, comportant un espace de rangement (1) présentant un élément support (2) doté de roulettes (4), et présentant également des premier (6) et deuxième (7) éléments latéraux agencés au niveau de côtés transversaux (8, 9) de l'élément support (2) ainsi qu'un élément de liaison (10) agencé au niveau de côtés transversaux des éléments latéraux (6, 7), en vis-à-vis de l'élément support (2), lesdits éléments (2, 6, 7, 10) présentant une configuration plane rectangulaire avec des surfaces intérieures (11, 12, 13, 14) et formant une cavité (21) entre lesdites surfaces intérieures (11, 12, 13, 14) ; **caractérisé par** deux éléments raidisseurs (39) reliant au moins deux éléments (2, 6, 7, 10) l'un à l'autre, lesdits éléments raidisseurs étant conçus à la manière de câbles de traction (40) et lesdits éléments raidisseurs (39) reliant deux coins diamétralement opposés de la cavité (15) et étant agencés à l'extérieur de ladite cavité (15).

2. Rangement transportable pour bois de chauffage (1) selon la revendication 1, **caractérisé en ce que** la cavité (1) est entourée d'un châssis (19) en forme de caisse, délimité par les surfaces intérieures (11, 12, 13, 14).

3. Rangement transportable pour bois de chauffage (1) selon la revendication 1 ou 2, **caractérisé en ce que** les éléments (2, 6, 7, 10) sont reliés de manière détachable.

4. Rangement transportable pour bois de chauffage (1) selon l'une des revendications précédentes, **caractérisé en ce qu'**au moins un élément de cloisonnement (17, 18) est agencé entre les éléments (2, 6, 7, 10) de manière à diviser la cavité (15) en au moins deux parties.

5. Rangement transportable pour bois de chauffage (1) selon l'une des revendications précédentes, **caractérisé en ce qu'**un élément latéral (6, 7) peut être doté d'au moins trois autres roulettes (4) et qu'un espace de rangement (1) ainsi conçu et pivoté de 90 degrés peut être amené à reposer sur une surface d'appui sur lesdites autres roulettes (4).

6. Rangement transportable pour bois de chauffage (1) selon l'une des revendications précédentes, **caractérisé en ce que** l'élément support (2) est doté d'au moins un composant raidisseur au niveau de la surface extérieure opposée à la surface intérieure.

7. Rangement transportable pour bois de chauffage (1) selon la revendication 6, **caractérisé en ce que** ledit composant raidisseur s'étend entre deux coins diamétralement opposés de la surface extérieure.

8. Rangement transportable pour bois de chauffage (1) selon l'une des revendications précédentes, **caractérisé en ce qu'**il est prévu au moins un élément lumineux (34), notamment un bandeau lumineux pourvu de diodes électroluminescentes, au niveau d'au moins une surface intérieure (11, 12, 13, 14) d'un élément (2, 6, 7, 10).

9. Rangement transportable pour bois de chauffage (1) selon l'une des revendications précédentes, **caractérisé par** au moins un élément d'appui (36) qui est agencé sur un élément (2, 6, 7, 10), est déployable par rapport à celui-ci et peut être placé de manière amovible contre la surface sous-jacente sur laquelle prend appui l'espace de rangement.

10. Rangement transportable pour bois de chauffage (1) selon l'une des revendications précédentes, **caractérisé en ce qu'**un élément formant porte est mobile par rapport à la cavité (15) au niveau d'au moins un élément latéral (6, 7) et ladite cavité (15) peut être close de manière réversible au moyen dudit élément formant porte (44).

11. Rangement transportable pour bois de chauffage (1) selon l'une des revendications précédentes, **caractérisé en ce que** l'espace de rangement présente au moins un élément formant poignée (5) conçu de préférence pour être rabattable ou pivotant.

12. Rangement transportable pour bois de chauffage (1) selon l'une des revendications précédentes, **caractérisé par** au moins un élément de couplage (42) ainsi qu'au moins un logement d'élément de couplage (43) qui est de préférence agencé sur la surface extérieure de l'élément de liaison (10) ou une surface arrière de l'espace de rangement (1).

13. Rangement transportable pour bois de chauffage (1) selon l'une des revendications précédentes, **caractérisé en ce que** les éléments (2, 6, 7, 10) sont conçus dans un matériau à base de bois.

14. Rangement transportable pour bois de chauffage (1) selon l'une des revendications précédentes, comportant des morceaux de bois agencés dans la cavité (15) et une caisse intérieure (27) en forme de caisse située entre les morceaux de bois.

15. Ensemble pour rangement de bois de chauffage (41) comportant au moins deux rangements transportables pour bois de chauffage (1) selon l'une des revendications 12 à 14, **caractérisé en ce que** les espaces de rangement (1) sont assemblés au moyen d'un élément de couplage (42) d'un espace de rangement (1) qui coopère avec un logement d'élément de couplage (43) d'un autre espace de rangement (1).
